# EUROPÄISCHE PATENTANMELDUNG

(11) **EP 1 897 905 A1**
(43) Veröffentlichungstag der Anmeldung: **12.03.2008**
(21) Anmeldenummer: 07115628.5
(22) Anmeldetag: 04.09.2007
(51) Int. Cl.: C08J 9/36, A45D 33/34, A61K 8/02, C08J 7/04, A45D 34/04

(54) **Schichtverbundwerkstoff und entsprechende Kosmetika-Applikationseinrichtung**

(30) Priorität: 08.09.2006 DE 202006014022 U
(71) Anmelder: Koschaum GMBH, 91183 Abenberg (DE)
(72) Erfinder: Stieber, Hans-Joachim, 90471 Nürnberg (DE)
(74) Vertreter: Götz, Georg Alois

(57) **Zusammenfassung**

Schichtverbundwerkstoff, mit einer Schaumstoffschicht (2), die zumindest teilweise mit einer porösen (4) Kunststoff-Beschichtung versehen ist, die aus einer getrockneten Kunststoff-Dispersion (3) gebildet ist.

## Beschreibung

Die Erfindung betrifft einen Schichtverbundwerkstoff für Puderquasten oder sonstige Einrichtungen zur Applikation von Kosmetika. Der Basis- bzw. Grundkörper dieser Einrichtung ist mittels Schaumstoff gebildet. Ferner betrifft die Erfindung eine mit dem Schichtverbundwerkstoff realisierte Kosmetika-Applikationseinrichtung, insbesondere Puderquaste, deren flacher und/oder scheibenartiger Basiskörper mit einer Schaumstoffschicht gebildet ist.

Es sind Puderquasten bekannt (vgl. DE 696 00 100 T2), die mit Schaumstoff gebildet sind, beispielsweise aus Polyester, Polyether, Polyethylen, Polystyren, Polyurethan, Polyvinylchlorid usw. Ferner ist es bekannt, den Schaumstoff-Basiskörper auf seiner Oberfläche mit einer Beflockungsschicht zu versehen, so dass sich eine faserige Oberfläche ergibt (vgl. EP 1 046 356 A2). Sollen allerdings flüssige Kosmetika appliziert werden, dann ist die Puderquaste mit der beflockten bzw. faserigen Oberfläche dafür nicht robust genug; die Fasern bzw. Beflockung verkleben dann, so dass der Kosmetika-Auftrag verschmiert.

Zum Auftrag feuchter oder flüssiger Kosmetika sind an sich bekannte Latexschwämme aus Gummi besser geeignet, weil sie eine stabile Konsistenz besitzen. Allerdings lassen sich die im Kosmetikbereich für die Auftragsfähigkeit geforderten runden Kanten bzw. Ränder bei Latexschwämmen nur durch herstellungstechnisch aufwändiges und teures Fräsen bilden. Würde man die gerundeten Kanten durch Schweißen wie bei den oben angesprochenen Schaumstoff-Puderquasten versuchen zu erzeugen, würden die Latex-Ränder bzw. -Kanten lediglich verbrennen oder verkohlen, weil ja Latex ein Material auf der Basis von Gummi und mithin kein Thermoplast ist.

Der Erfindung liegt die Aufgabe zugrunde, ein Material bzw. einen Wertstoff zur Verfügung zu stellen, mit welchem sich Puderquasten oder sonstige Kosmetika-Applikationseinrichtungen schaffen lassen, die unter Beibehaltung einer einfachen und kostengünstigen Herstellbarkeit auch gegenüber flüssigen oder hohen Feuchtigkeitsgehalt aufweisenden Kosmetikprodukten eine hohe und stabile Konsistenz aufweisen. Zur Lösung wird auf den im Anspruch 1 angegebenen Schichtverbundwerkstoff und auf die im Anspruch 7 angegebene Kosmetika-Applikationseinrichtung verwiesen. Optionale, zweckmäßige Ausgestaltungen der erfinderischen Idee ergeben sich aus den abhängigen Ansprüchen.

Indem erfindungsgemäß an der Schaumstoffschicht als Basis des Verbundwerkstoffs bzw. des daraus gebildeten Produkts festgehalten wird, ist die Beibehaltung der Herstellbarkeit mit einfachen, kostengünstigen Mitteln gewährleistet. Durch die neuartige Oberflächenbehandlung des Basis-Schaumstoffs mittels beschichtungsfähiger Dispersionen, die zur Bildung poröser und nicht glatter Oberflächen ausgesucht sind, wird der Vorteil einer haptischen Wahrnehmung und eines Zusammenhalts erzielt, welche dem vom Werkstoffkonzept her völlig anders strukturierten Latex-Auftragsmitteln entsprechen. Mit dem erfindungsgemäßen Verbundwerkstoff lassen sich also Produkte mit einer Porenstruktur an der Oberfläche schaffen, bei denen die menschlich taktile Wahrnehmung und Stabilität gegenüber feuchten oder flüssigen Kosmetika an die von Latex-Auftragsschwämmen herankommt, die sich aber gleichwohl an den Rändern und Kanten durch Schweißen in herstellungstechnisch einfacher Weise runden lassen.

Mit besonderem Vorteil wird als Kunststoff-Dispersion eine beschichtungs- und trocknungsfähige Polyurethan-Dispersion oder eines sonstige Polymer-Dispersion verwendet. Auf dem Markt sind Polyurethan- (PU-) Dispersionen erhältlich, die einerseits Lackeigenschaften mit glatten Oberflächen und andererseits im Gegenteil poröse Oberflächen ergeben. Letztere sind im Rahmen der Erfindung einzusetzen. Als besonders vorteilhaft hat sich in der Praxis der Einsatz von PU-Dispersionen auf wässriger Basis erwiesen.

Mit den erfindungsgemäßen Kunststoff-Dispersionen ist eine weitere Erfindungsausbildung dahingehend eröffnet, die flüssige Beschichtungs-Dispersion mit Zusätzen an Farbstoffen zu versehen, um die jeweils erwünschte Farbe erlangen zu können. Damit wird die Anforderungsflexibilität hinsichtlich des optischen Aussehens erhöht.

Weitere Einzelheiten, Merkmale, Merkmalskombinationen, Wirkungen und Vorteile auf der Basis der Erfindung ergeben sich aus der nachfolgenden Beschreibung eines bevorzugten Ausführungsbeispiels der Erfindung und aus den Zeichnungen. Diese zeigen jeweils im Schnitt in:
- Figur 1: die Struktur eines Ausführungsbeispiels für einen erfindungsgemäßen Schichtverbundwerkstoff,
- Figur 2: eine aus diesem Schichtverbundwerkstoff gebildete Puderquaste;

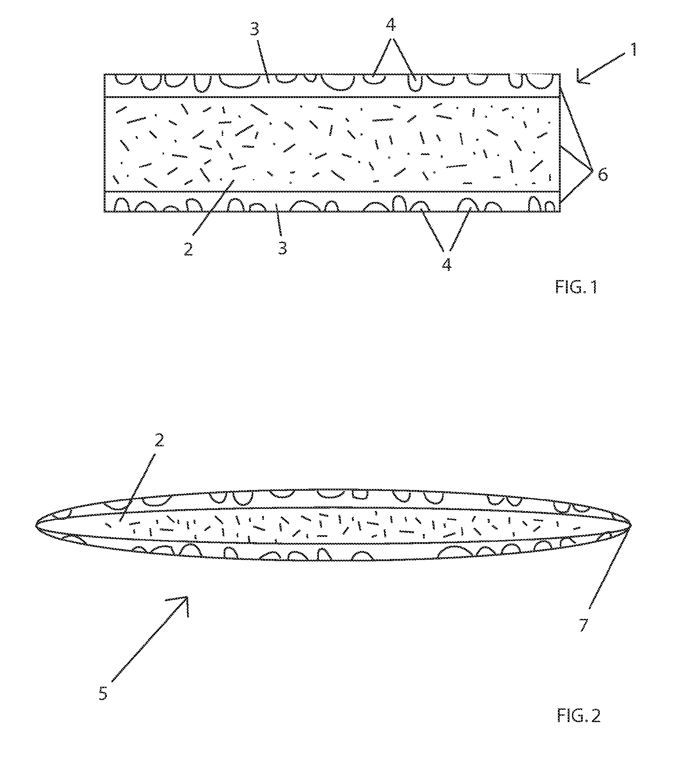

Gemäß Figur 1 ist der Schichtverbundwerkstoff 1 mit einer Schaumstoffschicht 2 als Basiskörper gebildet. Dieser besitzt im Ausgangszustand eine rechteckige bzw. quaderartige und längliche Form. Auf den gegenüberliegenden Breitseiten dieser Schaumstoffschicht 2 ist jeweils eine poröse PU-Dispersionsschicht 3 aufgetragen. Deren Dicke ist wesentlich geringer als die der Basis-Schaumstoffschicht 2. Die PU-Dispersionsschicht 3 bildet eine poröse Oberfläche mit einer Vielzahl von unregelmäßig verteilten, kleinen Öffnungen 4 oder Blasen. Diese dienen der Aufnahme des zu applizierenden Kosmetikums.

Geeignete PU-Dispersionen auf der Basis von Wasser, in welchem Polyurethan fein verteilt ist, sind an sich bekannt und auf dem Markt mit geeigneten Eigenschaften erhältlich. Eine derartige, wässrige PU-Dispersion wird zur Bildung des erfindungsgemäßen Verbundschichtstoffs auf die Schaumstoffschicht 2 aufgetragen. Im nächsten Schritt lässt man die aufgetragene Dispersion trocknen, woraus sich die PU-Dispersionsbeschichtung 3 mit den Poren bzw. Öffnungen 4 ergibt.

Gemäß Figur 2 ist der Schichtverbundwerkstoff 1 zu einer Puderquaste 5 weiterverarbeitet, und zwar im Wesentlichen dadurch, dass die ursprünglich gegenüberliegenden, beiden PU-Dispersionsschichten 3 durch Schweißen an ihren Rändern 6 unter Bildung einer Schweißnaht 7 miteinander verbunden worden sind. Gleichzeitig wird dadurch der ursprünglich eckige Rand der Schaumstoffschicht rundlich.

### Bezugszeichenliste

- 1: Schichtverbundwerkstoff
- 2: Schaumstoffschicht
- 3: PU-Dispersionsschicht
- 4: Pore, Öffnung
- 5: Puderquaste
- 6: Rand
- 7: Schweißnaht

## Patentansprüche

1. Schichtverbundwerkstoff (1), mit einer Schaumstoffschicht (2), die zumindest teilweise mit einer porösen (4) Kunststoff-Beschichtung versehen ist, die aus einer getrockneten Kunststoff-Dispersion (3) gebildet ist.

2. Schichtverbundwerkstoff (1) nach Anspruch 1, **dadurch gekennzeichnet, dass** die Kunststoff-Dispersion (3) eine beschichtungs- und trocknungsfähige Polyurethan- oder sonstige Polymer-Dispersion ist.

3. Schichtverbundwerkstoff (1) nach Anspruch 2, **dadurch gekennzeichnet, dass** die Dispersion (3) auf der Basis von Wasser gebildet ist.

4. Schichtverbundwerkstoff (1) nach Anspruch 3, **dadurch gekennzeichnet, dass** die Dispersion (3) eine Feinverteilung von Polyurethan- oder sonstigen Polymerteilchen in Wasser umfasst.

5. Schichtverbundwerkstoff (1) nach einem der vorangehenden Ansprüche, **dadurch gekennzeichnet, dass** die Schaumstoffschicht (2) Polyester, Polyether, Polyethylen, Polystyren, Polyurethan und/oder Polyvinylchlorid aufweist.

6. Einrichtung, insbesondere Puderquaste (5), zur Applikation von Kosmetika, mit einem Schichtverbundwerkstoff (1) nach einem der vorangehenden Ansprüche, **dadurch gekennzeichnet, dass** die Schaumstoffschicht (2) als scheibenartiger und/oder flacher Basiskörper ausgebildet ist, auf dem die Kunstoffdispersion (3) in flüssiger Form zumindest auf einer Seite beschichtet und zur Bildung einer porösen (4) Oberfläche getrocknet ist.

7. Applikationseinrichtung nach Anspruch 6, **dadurch gekennzeichnet, dass** der Basiskörper auf seinen beiden gegenüberliegenden und/oder parallelen Stirn- und/oder Flachseiten mit der Kunststoffdispersion (3) beschichtet ist, und die beiden Beschichtungen am Scheibenumfang oder Basiskörperrand (6) über eine Schweißnaht (7) verbunden sind.
